# EUROPÄISCHE PATENTANMELDUNG

(11) **EP 1 022 742 A2**
(43) Veröffentlichungstag der Anmeldung: **26.07.2000**
(21) Anmeldenummer: 00890011.0
(22) Anmeldetag: 17.01.2000
(51) Int. Cl.: G11B 33/04

(54) **CD-Hülle**

(30) Priorität: 21.01.1999 AT 7799
(71) Anmelder: Sony DADC Austria AG, 5081 Anif (AT)
(72) Erfinder: Irnleitner, Norbert, 5101 Bergheim (AT); Reiter, Gottfried, 5423 St. Koloman (AT)
(74) Vertreter: Kliment, Peter

(57) **Zusammenfassung**

Hülle für Compact-Discs aus Papier, Karton, Kunststoff oder dgl. mit zwei, die Hülle bildende Wandteilen (2,3), wobei die Hülle entlang ihres Umfanges mit Ausnahme einer Entnahmeöffnung (4), verschlossen ist. Um einen sicheren Transport der CD zu ermöglichen ohne dabei auf den Vorteil der einfachen Entnahme der CD ohne Berührung der Schreib/Lesefläche aus der kuvertartigen Hülle verzichten zu müssen, ist vorgesehen, daß ein Wandteil (2) ausgehend von einer Kante (6) der Entnahmeöffnung (4) bis zu seinem Mittenbereich entlang mindestens einer Linie (9,10) perforiert ist.

## Beschreibung

Die vorliegende Erfindung bezieht sich auf eine Hülle für Compact-Discs gemäß dem Oberbegriff des Anspruches 1.

Die am meisten bekannte und verbreitete Verpackung von CDs ist jene der Hartkunststoffbehälter. Diese Art der Verpackung ist vor allem bei Musik-CDs vorteilhaft, da jede Musik-CD auch ein sogenanntes Cover und/oder Booklet besitzt, das dann im Deckel dieser Hartkunststoffbehälter untergebracht wird. Der Bodenteil der Hartkunststoffbehälter enthält dann üblicherweise das "Back-Cover" auf dem die Namen der auf der CD enthaltenen Lieder, sowie deren Länge, Interpret usw. angeführt sind.

Es gibt jedoch auch Anwendungen, wo lediglich eine einfache Verpackung der CDs gefordert ist, ohne daß dabei Rücksicht auf eventuell notwendigen Platz für Covers oder ähnliche Inhalte zu nehmen ist. Speziell wenn es darum geht, eine kostengünstige und womöglich wiederverwertbare CD-Hülle zu verwenden, wird die CD oft auch in eine Hülle aus Papier, Karton oder Kunststoff gesteckt.

Bisherige Hüllen dieser Art sind im wesentlichen ähnlich wie ein Briefkuvert aufgebaut und bestehen aus zwei die Hülle bildende Wandteilen, die entlang ihres Umfanges mit Ausnahme einer Entnahmeöffnung miteinander verbunden sind. Sie sind entweder gänzlich aus Papier oder aber besitzen einen durchsichtigen, kreisförmigen Kunststoffeinsatz. Im Bereich der Entnahmeöffnung der CD befindet sich des öfteren zusätzlich wie bei einem Briefkuvert eine entsprechende Überlappung, die entweder offen ist, oder aber verschlossen sein kann.

Einige dieser CD-Hüllen weisen auch eine Öffnung auf, welche sich an einem Wandteil von einer Kante der Entnahmeöffnung bis zum Mittenbereich erstreckt. Dadurch kann die CD mittels Daumen und Zeigefinger leicht aus der kuvertartigen Hülle entnommen werden. Eine solche CD-Hülle zeigt beispielsweise die US 3 987 900.

Nachteil dieser CD Hüllen nach dem Stand der Technik ist die Tatsache, daß die CD während des Transportes entlang der Öffnung in der Hülle ungeschützt ist und Verschmutzungen aber auch versehentliche Fingerabdrücke an jener Stelle der CD auftreten können, die aufgrund der Öffnung nicht geschützt ist.

Solche Verschmutzungen und Fingerabdrücke auf der Auslesefläche einer CD können jedoch die Lesbarkeit der CD beinträchtigen, so daß ein einwandfreies Auslesen der auf der CD gespeicherten Daten nicht mehr möglich ist. Noch problematischer ist die Beschädigung bzw. Verschmutzung der Auslesefläche der CD jedoch bei vom Endkunden beschreibbaren und wiederbeschreibbaren CDs, den sogenannten CD-Rs bzw. CD-RWs. Jede noch so kleine Verunreinigung auf der Lese-/Schreibfläche kann zu erhöhten Fehlerraten der CD führen bzw. die gesamte CD unbrauchbar machen.

Ziel der vorliegenden Erfindung ist es daher ein CD Hülle der eingangs erwähnten Art vorzusehen, die einen sicheren Transport der CD ermöglicht ohne dabei auf den Vorteil der einfachen Entnahme der CD ohne Berührung der Schreib/Lesefläche aus der kuvertartigen Hülle verzichten zu müssen.

Erfindungsgemäß wird dies durch die kennzeichnenden Merkmale des Anspruches 1 erreicht.

Dadurch ist ein solcher sicherer Transport der CD möglich, da die gesamte Schreib/Lesefläche durch die Hülle geschützt ist. Außerdem ist die Hülle während des Transports wesentlich stabiler, da sie noch keine Öffnung aufweist. Die Hülle kann dann zur Entnahme der CD entlang der Perforation eingerissen werden und es ist so möglich, die CD zwischen Zeigefinger und Daumen zu greifen und durch Ziehen in Richtung Entnahmeöffnung aus der Hülle zu entfernen, wobei die CD nur in ihrer mittigen Öffnung und entlang ihres Umfanges berührt werden muß. Eine Berührung der Schreib-/Lesefläche ist nicht erforderlich. Die Perforation kann dabei eine durchlochte Linie sein aber auch beispielsweise durch eine Stanzung hergestellt werden, die die Hülle nicht gänzlich durchtrennt sondern lediglich die Dicke des Kartons, des Papiers oder des Kunststoffes der CD-Hülle entlang der Reißlinie verringert (versetzte Stanzung). Prinzipiell ist jegliche absichtliche Strukturschwächung entlang der gewünschten Reißlinie als Perforation denkbar.

Durch das Merkmal des Anspruches 2 wird die Öffnung im Wandteil so klein wie möglich gehalten, um der CD auch nach dem Zurückstecken in die Hülle den größtmöglichen Schutz zu gewähren.

Die Merkmale des Anspruches 3 ermöglichen ebenfalls einen erfindungsgemäßen sicheren Transport der CD, wobei die CD auch in ihrem verpackten Zustand in ihrer inneren Bohrung und entlang der Hüllenkante gehalten werden kann. Das Einreissen der Strukturschwächung kann somit von innen erfolgen und ist somit leichter zu bewerkstelligen.

Die Merkmale des Anspruches 4 ermöglichen eine einfache Herstellung der erfindungsgemäßen Hülle aus einem einzigen Teil Papier, Karton oder Kunststoff.

Im folgenden erfolgt nun eine detaillierte Beschreibung der Erfindung. Dabei zeigt
- Fig.1: eine axonometrische Ansicht einer erfindungsgemäßen CD-Hülle mit perforiertem streifenförmigen Abschnitt eines Wandteiles
- Fig.2: eine Ansicht einer erfindungsgemäßen CD-Hülle vor der Faltung

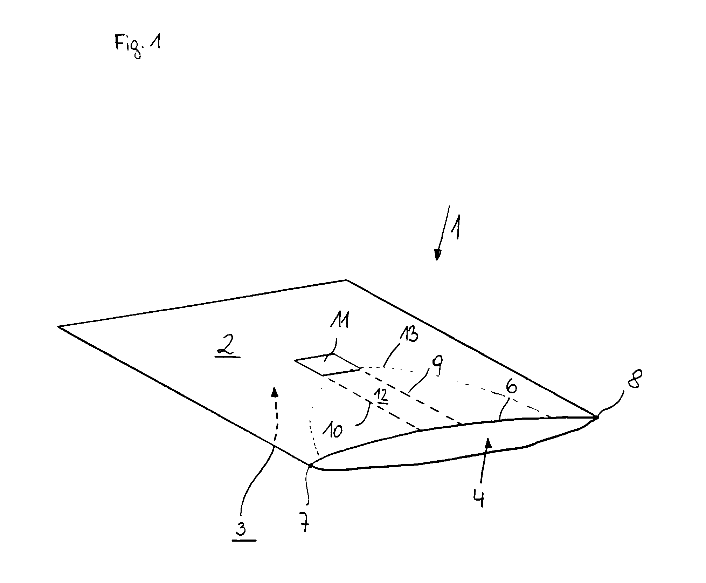

Fig. 1 zeigt die bereits gefaltete, erfindungsgemäße CD-Hülle 1, die durch die beiden Wandteile 2,3 gebildet wird. Die Darstellung erfolgt dabei so, wie sie sich dem Betrachter bei leichtem Drücken an den beiden Punkten 7,8 ergeben würde. Sehr deutlich ist die Entnahmeöffnung 4 zu erkennen, durch welche die CD aus der Hülle entnehmbar ist.

Der Wandteil 2 weist dabei zwei parallel geführte Linien 9,10 (Reißlinien) auf, entlang welcher der Wandteil 2 perforiert (beispielsweise durch Bohrungen oder eine versetzte Stanzung). Die Perforation (Reißlinien) 9,10 erstreckt sich dabei von der Kante 6 der Entnahmeöffnung 4 bis zum Mittenbereich des Wandteiles 2. Dort ist vorteilhafterweise aber nicht notwendigerweise eine Öffnung 11 angeordnet.

Um die CD nun aus der Hülle 1 zu entfernen, muß der zwischen den Reißlinien befindliche, streifenförmige Abschnitt 12 des Wandteiles 2 entfernt werden. Dies ist auf zwei unterschiedliche Arten möglich. Entweder durch Einreißen der Perforation von der Kante 6 in Richtung Mittenbereich des Wandteiles 2. Bei Unachtsamkeit oder durch schlechtes Halten der Hülle 1 kann es dabei vorkommen, daß diese versehentlich in jenem Bereich einreißt, der nicht entfernt werden soll. Um dies zu verhindern kann der streifenförmige Abschnitt 12 auch durch Einreißen der Perforation von der Öffnung 11 (sofern diese vorhanden ist) in Richtung der Kante 6 erfolgen. Ein unbeabsichtigtes Beschädigen des den streifenförmigen Abschnitt 12 umgebenden Bereich des Wandteiles 2 kann so wirkungsvoll verhindert werden.

Nachdem der streifenförmige Abschnitt 12 des Wandteiles 2 entfernt ist, kann die CD aus der Hülle entfernt werden.

Die strichlierte Linie 13 zeigt wiederum eine andere (zB. parabelförmige) Möglichkeit der Ausführung der Perforation, wobei dann die so entstehende Öffnung einen parabelförmigen Umriß hätte.

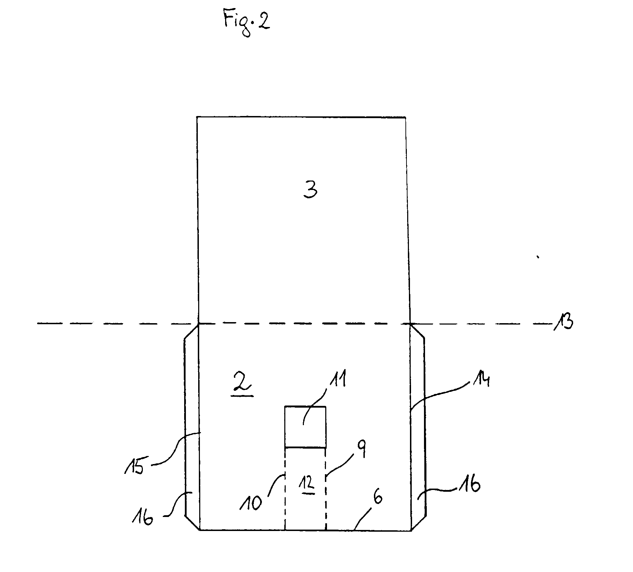

Fig. 2 zeigt eine erfindungsgemäße CD-Hülle vor der eigentlichen Faltung, durch welche die Hülle gebildet wird anhand des Ausführungsbeispieles in Fig.2 mit vorhandener Öffnung 11. Analoges gilt selbstverständlich auch für eine Hülle nach Ausführungsbeispiel in Fig.1. Die eigentliche Hülle wird dabei durch Faltung eines einzigen im wesentlichen rechteckigen Stückes Papier, Karton oder Kunststoff um dessen Querachse (13) gebildet. Entlang zweier paralleler Seitenkanten (14,15) eines der beiden so gebildeten Wandteile (2) sind dabei Falzen (16) angeordnet, so daß nach der Faltung die Falzen (16) mit dem jeweils anderen Wandteil (3) verklebt werden können.

## Patentansprüche

1. Hülle für Compact-Discs aus Papier, Karton, Kunststoff oder dgl. mit zwei, die Hülle bildende Wandteilen (2,3), wobei die Hülle entlang ihres Umfanges mit Ausnahme einer Entnahmeöffnung (4), verschlossen ist, **dadurch gekennzeichnet**, daß ein Wandteil (2) ausgehend von einer Kante (6) der Entnahmeöffnung (4) bis zu seinem Mittenbereich entlang mindestens einer Linie (9,10) perforiert ist.

2. Hülle für Compact-Discs nach Anspruch 3, **dadurch gekennzeichnet**, daß der durch die mindestens eine Linie (9,10) und der Kante (6) der Entnahmeöffnung (4) begrenzte Abschnitt (12) im wesentlichen Streifenform besitzt.

3. Hülle für Compact-Discs nach einem der Ansprüche 3 und 4, **dadurch gekennzeichnet**, daß im Mittenbereich jenes Wandteiles (2), welcher entlang der mindestens einen Linie (9,10) perforiert ist, im Anschluß an den durch diese Perforationen und die Kante (6) der Entnahmeöffnung (4) begrenzten Abschnitt (12) eine Öffnung (11) angeordnet ist.

4. Hülle für Compact-Discs nach einem der Ansprüche 1 bis 5, **dadurch gekennzeichnet**, daß die beiden Wandteile (2,3) durch Faltung eines einzigen im wesentlichen rechteckigen Papiers, Kartons oder Kunststoffteiles um dessen Querachse (13) gebildet wird, wobei entlang zweier paralleler, freier Seitenkanten (14,15) eines der beiden so entstehenden Wandteile (2) Falzen (16) angeordnet sind.
